# EUROPÄISCHE PATENTSCHRIFT

(11) **EP 4 518 063 B1**
(45) Veröffentlichungstag und Bekanntmachung des Hinweises auf die Patenterteilung: **10.12.2025**
(21) Anmeldenummer: 25152068.0
(22) Anmeldetag: 17.07.2019
(51) Int. Cl.: E04G 15/06, F16L 5/14, H02G 3/22

(54) **VERWENDUNG EINER DURCHFÜHRUNG ZUM EINGIESSEN IN EIN BODENELEMENT**
USE OF A FEEDTHROUGH FOR CASTING INTO A BASE ELEMENT
UTILISATION D'UN PASSAGE POUR COULER DANS UN ÉLÉMENT DE SOL

(30) Priorität: 18.07.2018 DE 102018005720; 18.07.2018 DE 102018005719; 18.07.2018 DE 102018005718; 18.07.2018 DE 102018005717
(43) Veröffentlichungstag der Anmeldung: 05.03.2025
(62) Teilanmeldung aus: 19186764.7
(73) Patentinhaber: Hauff-Technik GmbH & Co. KG, 89568 Hermaringen (DE)
(72) Erfinder: KURZ, Ralf, 89537 Giengen (DE); SCHEURING, Horst, 89542 Herbrechtingen (DE); SCHMID, Jörg, 89168 Niederstotzingen (DE)
(74) Vertreter: Szynka Smorodin Patentanwälte Partnerschaft mbB

(56) Entgegenhaltungen:
- DE-A1- 1 648 920
- DE-A1- 102005 041 176
- DE-U1- 202013 007 621

## Beschreibung

Gegenstand der Offenbarung ist die Verwendung einer Durchführung zum Eingießen in eine Bodenplatte und Hindurchführen einer Leitung.

Die in Rede stehende Durchführung kann als Gebäudeeinführung genutzt werden, um im Falle eines kellerlosen Gebäudes die Leitung durch dessen Bodenplatte hindurch in das Gebäude hinein zu verlegen. Die Durchführung wird zunächst auf der Baustelle positioniert und bspw. anhand eines Schnurgerüsts ausgerichtet. Beim Gießen der Bodenplatte wird sie in diese eingegossen und hält einen Durchtritt für die Leitung bzw. Leitungen frei. Solche Durchführungen sind bspw. aus der DE 10 2005 041 176 A1 und der DE 20 2013 007 621 U1 bekannt.

Aus der DE 16 48 920 A1 ist ein unterfluriger Hydrant in Form eines Verteilerkastens für Zwischendecken bekannt.

Der vorliegenden Erfindung liegt das technische Problem zugrunde, eine besonders vorteilhafte Durchführung als Gegenstand einer solchen Verwendung anzugeben.

Dies wird erfindungsgemäß mit den Merkmalen gemäß Anspruch 1 gelöst.

Dieser betrifft eine Verwendung einer Durchführung zum Eingießen in eine Bodenplatte und Hindurchführen einer Leitung, welche Durchführung ein Mantelrohr und einen Grundkörper aufweist, der an einem oberen Ende des Mantelrohres angeordnet ist, wobei der Grundkörper ein Bodenteil und eine Seitenwand aufweist und damit einen Hohlraum an dem oberen Ende des Mantelrohres bildet, wobei das Mantelrohr und der Grundkörper solchermaßen in die Bodenplatte eingegossen werden, dass die Seitenwand gegenüber einer Oberkante der Bodenplatte um höchstens 5 cm übersteht, und wobei nach dem Gießen der Bodenplatte auf dieser ein Fußbodenaufbau erstellt wird, wobei ein Hohlraum an dem oberen Ende des Mantelrohres freigehalten wird, und wobei nach dem Gießen der Bodenplatte die Leitung durch das Mantelrohr verlegt wird, wobei ein Rohrstutzen eines Montageaufsatzes das Mantelrohr nach oben hin verlängert.

Die Durchführung weist ein Mantelrohr und einen Grundkörper auf, der am oberen Ende des Mantelrohres angeordnet ist. Mit einem Bodenteil und einer Seitenwand begrenzt der Grundkörper einen Hohlraum am oberen Ende des Mantelrohres. Diese Anordnung wird dann solchermaßen in die Bodenplatte eingegossen, dass die Seitenwand des Grundkörpers relativ zu einer Oberkante der Bodenplatte allenfalls einen Überstand von höchstens 5 cm hat, also entweder nur geringfügig übersteht oder auch bündig bzw. unterhalb der Oberkante liegt.

Im Weiteren wird auf der Bodenplatte ein Fußbodenaufbau erstellt, typischerweise eine Estrichschicht aufgegossen, oftmals in Verbindung mit einer Dämmschicht darunter (zwischen Bodenplatte und Estrich) und/oder einem Fußbodenbelag darauf. Beim Gießen der Bodenplatte ist in der Regel noch nicht die Höhe des später darauf erstellten Fußbodenaufbaus bekannt, es lässt sich also nicht einfach das Mantelrohr beim Gießen der Bodenplatte auf einer solchen Höhe platzieren, dass sein oberes Ende passend zum fertigen Fußbodenaufbau liegt. Eine Herangehensweise kann insofern darin liegen, das Mantelrohr bzw. einen darüber angeordneten Kasten (der einen Hohlraum am Ende des Mantelrohres freihält) mit einem solchen Übermaß vorzusehen, dass in jedem Fall ein Überstand gegenüber der Oberkante des Fertigfußbodens resultiert. Dieser Überstand muss dann abgelängt bzw. -getragen werden, was für einen Monteur Aufwand bedeutet, ein Nichtabtragen kann hingegen ein Sicherheitsrisiko darstellen (siehe unten).

Vor diesem Hintergrund geht der vorliegende Ansatz dahin, den Grundkörper, mit dem der Hohlraum oberhalb des Mantelrohres frei und damit dieses zugänglich gehalten wird, zwar mit gegebenenfalls einem (kleinen) Überstand in die Bodenplatte einzugießen, diesen Überstand aber so gering zu halten, dass das obere Ende des Grundkörpers dann in jedem Fall innerhalb des Fußbodenaufbaus liegt.

Aufgrund des allenfalls geringen Überstands von in der Reihenfolge der Nennung zunehmend bevorzugt nicht mehr als 5 cm, 4 cm, 3 cm, 2 cm bzw. 1 cm steht der Grundkörper dann nicht aus dem Fußbodenaufbau hervor, ist also entsprechend auch kein Einkürzen erforderlich. Beim Erstellen des Fußbodenaufbaus, insbesondere beim Gießen des Estrichs, wird der Hohlraum oberhalb des Mantelrohres gesondert freigehalten, bspw. mit einem ein- bzw. angesetzten Schalungselement (siehe nachstehend im Einzelnen bezüglich verschiedener Möglichkeiten). Durch das Mantelrohr kann dann eine Leitung durch die Bodenplatte hindurch verlegt werden, dazu ist bzw. wird ein Montageaufsatz mit einem Rohrstutzen an das Mantelrohr angesetzt. Dieser Rohrstutzen verlängert das Mantelrohr nach oben, insbesondere zur Oberkante des Fußbodenaufbaus hin. Bevorzugt weist der Montageaufsatz eine Flanschplatte auf, von welcher sich der Rohrstutzen weg nach unten erstreckt, siehe unten im Detail.

Da der Grundkörper (auch ohne Einkürzen) nicht aus dem Fußbodenaufbau hervorsteht, kann der Montageaufsatz relativ nah bzw. bündig mit der Oberkante des Fußbodenaufbaus positioniert werden. Dies kann bei einer Gebäudeeinführung, wenn es in dem Gebäude zu einem Brand kommt, ein Durchschlagen auf z. B. die Gasleitung verzögern bzw. verhindern. Mit einem mit dem Fußbodenaufbau bündig angeordneten Montageaufsatz kann das darunterliegende Mantelrohr ein Stück weit zum Gebäudeinneren abgeschirmt werden. Würde zum Vergleich ein aus dem Fußbodenaufbau hervorstehender Kasten, der eingekürzt werden muss (siehe vorne) von einem Monteur nicht ordnungsgemäß eingekürzt, würde die überstehende Seitenwand im Brandfall schnell abschmelzen und damit einen "Kanal" zu der Gasleitung freigeben (z. B. im Falle von Kunststoffmaterial, das wegen des Einkürzens sinnvoll wäre).

Bevorzugt hat der Grundkörper vorliegend insgesamt eine vergleichsweise geringe Höhe, bspw. von nicht mehr als 10 cm, 8 cm, 6 cm, 5 cm bzw. 4 cm, mit möglichen (davon unabhängigen) Untergrenzen bei z. B. mindestens 1 cm bzw. 2 cm. Die Höhe der Seitenwand liegt also bevorzugt in einem entsprechenden Bereich.

Bevorzugte Ausgestaltungen finden sich in der nachstehenden Offenbarung, wobei bei der Darstellung der Merkmale nicht immer im Einzelnen zwischen Verfahrens- bzw. Verwendungs- oder auch Vorrichtungsaspekten unterschieden wird; jedenfalls implizit ist die Offenbarung hinsichtlich sämtlicher Anspruchskategorien zu lesen. Soweit bspw. eine Verwendung der Durchführung geschildert wird, ist dies stets auch als Offenbarung einer Durchführung zu lesen, die für eine entsprechende Verwendung ausgelegt ist.

Die geschilderten Vorteile können bereits zum Tragen kommen, wenn nur eine einzige Leitung durch die Durchführung geführt wird. Bei dieser Leitung könnte es sich bspw. um eine Gasleitung handeln, das geschilderte Problem des "Durchschlagens" kann sich jedoch auch im Falle einer anderen Sparte (z. B. Elektro bzw. Daten) ergeben, es kann nämlich bspw. aufgrund eines Störfalls bzw. Schadens gebäudeaußenseitig Schleichgas in dem Mantelrohr dieser Sparte anstehen. Bevorzugt ist die Durchführung zum Hindurchführen mehrerer Leitungen ausgelegt, wozu sie weiter bevorzugt mehrere Mantelrohre aufweist (siehe unten im Detail). Diese können dann für die einzelnen Sparten (Wasser, Gas, Elektro bzw. Daten etc.) genutzt werden. Hier kann die geschilderte Schutzfunktion im Besonderen zum Tragen kommen.

Der Montageaufsatz kann bevorzugt eine Flanschplatte, also einen nach außen hervortretenden Flansch aufweisen, besonders bevorzugt einen vollständig umlaufenden Flansch, der in der Montageposition einen seitlichen Überlapp mit der Oberfläche des Fußbodenaufbaus hat (eine vertikale Projektion des Flansches liegt zumindest teilweise in der Oberfläche des Fußbodenaufbaus); bevorzugt sitzt der Flansch auf der Oberfläche des Fußbodenaufbaus auf. Die Flanschplatte ist bevorzugt aus Kunststoff vorgesehen, insbesondere faserverstärktem Kunststoff, etwa glasfaserverstärktem Polyamid. Der Montageaufsatz kann insbesondere auch als Auszugssicherung dienen, also die Leitung axial in Position halten (gegen eine nach unten bzw. zum Gebäudeäußeren hin gerichtete Kraft), wenn die Leitung bspw. bei späteren Erdarbeiten mit einer Baggerschaufel Zug beansprucht wird (der Bagger in den Leitungsstrang greift).

In der Flanschplatte ist bevorzugt eine Durchgangsöffnung vorgesehen, durch welche sich dann die montierte Leitung ins Gebäudeinnere erstreckt. Nach unten fluchtet die Durchgangsöffnung mit dem Rohrstutzen. Die Leitung ist dann bevorzugt mit einem Dichtelement, bspw. aus einem Elastomermaterial, gegen den Montageaufsatz gedichtet. Damit besteht dann idealerweise keine fluidische Verbindung zwischen dem Inneren des Mantelrohres und dem Gebäudeinneren, kann auf diesem Weg als bspw. kein Gas bzw. Schleichgas ins Gebäudeinnere gelangen. Generell dient das Mantelrohr als Umhüllung bzw. Leerrohr für die eigentliche Leitung, die in der Regel erst nach dem Gießen der Bodenplatte bzw. Erstellen des Fußbodenaufbaus verlegt wird. Das Mantelrohr bildet bzw. ist Teil eines Schutzrohrsystems, das sich vom Gebäude bis bspw. zu einer straßenseitigen Anschlussstelle (Versorgungsleitung) erstreckt.

Dieses Schutzrohrsystem wird dann zumindest in Teilen, bevorzugt insgesamt (bis zur Anschlussstelle), bereits vor dem Gießen der Bodenplatte verlegt, beim Gießen der Bodenplatte kann der Graben dann bevorzugt bereits wieder aufgefüllt sein (auch zwischen Gebäude und Anschlussstelle). Die eigentliche Leitung, also bspw. ein Rohr (Gas, Wasser bzw. Fernwärme) oder ein Kabel (Elektro bzw. Daten) kann dann nachträglich verlegt werden, nämlich vom Gebäudeinneren oder von der Anschlussstelle her durch das Schutzrohrsystem eingeschoben werden. Dann kann die bereits erwähnte Dichtung zwischen Leitung und Montageaufsatz hergestellt werden.

Die Angaben "oben"/"unten" beziehen sich auf die vertikale Richtung, also auf die Situation, in der die Durchführung montiert wird. Angaben wie "seitlich" bzw. auch "innen"/"außen" betreffen ohne ausdrücklich gegenteilige Angabe die zu einer vertikalen Achse der Durchführung senkrechten, davon weg weisenden Richtungen (diese liegen horizontal). Die Seitenwand erstreckt sich bevorzugt umlaufend in sich geschlossen, fasst den Hohlraum also zu allen Seiten hin ein. In vertikaler Richtung gesehen kann sie eine runde, insbesondere kreisrunde, oder auch eine eckige Form (auch mit abgerundeten Ecken) haben. Die Mantelrohre können in vertikaler Richtung gesehen flächig angeordnet sein (bspw. an den Ecken eines Quadrats) oder bevorzugt in einer Reihe nebeneinander.

Als Alternative zum vorliegenden Gegenstand wurde eingangs auf einen aus dem Fußbodenaufbau hervorstehenden Kasten Bezug genommen, der anschließend eingekürzt wird (was Montageaufwand auf der Baustelle bedeutet). Wird ein solcher Kasten aus mehreren aufeinandergesetzten Kastenteilen aufgebaut, um das Einkürzen zu vereinfachen, bedeutet dies einen erhöhten Aufwand in der Fertigung (es muss eine erhöhte Zahl an Einzelteilen gehandhabt und zusammengesetzt werden). Demgegenüber kann der vorliegende Ansatz also auch eine Vereinfachung darstellen.

Gemäß einer bevorzugten Ausführungsform steht die Seitenwand gegenüber der Oberkante der Bodenplatte über und wird daran ein Schalungselement angesetzt, das beim Erstellen des Fußbodenaufbaus den Hohlraum an dem oberen Ende des Mantelrohres freihält.

Gemäß einer bevorzugten Ausführungsform wird der Grundkörper derart eingegossen, dass die Seitenwand gegenüber der Oberkante der Bodenplatte übersteht, bspw. um mindestens 1 cm. Die Seitenwand kann dann zum Ansetzen eines Schalungselements genutzt werden, insbesondere steht hierfür auch die Außenwandfläche der Seitenwand zur Verfügung. Das Schalungselement hält dann speziell beim Gießen des Estrichs den Hohlraum oberhalb des Mantelrohres frei.

Die Bodenplatte wird generell auf dem Erdreich gegossen, typischerweise auf einer Schüttung, insbesondere auf einer Sauberkeitsschicht. Sie wird in der Regel aus Beton gegossen, funktional bildet sie das Fundament des Gebäudes. Darauf wird später der Fußbodenaufbau erstellt, bspw. der Estrich aufgegossen (ggf. auf einer Dämmschicht als Teil des Fußbodenaufbaus), darauf kann ein Fußbodenbelag aufgebracht werden.

Gemäß einer bevorzugten Ausführungsform ist das Schalungselement ein Streifen, der an eine Wandfläche der Seitenwand und/oder an das Bodenteil des Grundkörpers geklebt wird.

In bevorzugter Ausgestaltung wird als Schalungselement ein Streifen genutzt, bspw. aus einem geschäumten Kunststoffmaterial. Dieser wird dann z. B. an die Außenwandfläche oder auch die Innenwandfläche der Seitenwand geklebt, bspw. mit einem Klebeband. Zusätzlich oder alternativ kann der Streifen auch mit dem Bodenteil des Grundkörpers verklebt werden.

Gemäß einer bevorzugten Ausführungsform wird der Grundkörper bündig mit der Oberkante der Bodenplatte in diese eingegossen.

Bei einer alternativ zu dem Überstand bevorzugten Ausführungsform wird der Grundkörper mit der Oberkante der Bodenplatte bündig eingegossen. Dies kann bspw. das Abziehen bzw. Glätten des Vergussmaterials, in der Regel Beton, vereinfachen. Auch in dieser Variante kann die Seitenwand beim Erstellen des Fußbodenaufbaus zum Ansetzen eines Schalungselements genutzt werden, es kann bspw. ein Streifen an die Innenwandfläche geklebt werden. Zusätzlich oder auch alternativ kann in den Grundkörper auch ein Formkörper eingesetzt werden, der gegenüber der Oberkante der Bodenplatte hervorsteht. Die Seitenwand kann einem solchen Formkörper eine definierte Position vorgeben und einem Verrutschen vorbeugen.

Erfindungsgemäß wird der Montageaufsatz, dessen Rohrstutzen bei der fertig im Fußbodenaufbau montierten Durchführung an dem Mantelrohr sitzt, bereits gemeinsam mit dem Grundkörper eingegossen. Der Rohrstutzen wäre dann also bspw. in das Mantelrohr eingeschoben, bevorzugt so weit, dass eine Flanschplatte des Montageaufsatzes in dem Hohlraum des Grundkörpers angeordnet ist, bevorzugt vollständig darin aufgenommen ist. Letzteres kann insoweit von Vorteil sein, als dann der Grundkörper samt Flanschplatte bodenbündig in die Bodenplatte eingegossen werden kann. Nach dem Eingießen in die Bodenplatte, vor dem Erstellen des Fußbodenaufbaus, wird der Montageaufsatz dann ein Stück weit nach oben ausgezogen (egal ob zuvor bodenbündig eingebaut oder nicht). In diesem Zeitpunkt ist die Höhe des Fußbodenaufbaus dann in der Regel bekannt, der Montageaufsatz kann auf diese Höhe eingestellt werden. Es kann also bspw. eine Unterseite der Flanschplatte auf dieser Höhe bzw. auch ein wenig darüber liegen (z. B. um höchstens 10 cm, 5 cm, 4 cm, 3 cm, 2 cm bzw. 1 cm), um dann nach der Fertigstellung des Fußbodenaufbaus nach unten in die Anlage versetzt zu werden.

Gemäß einer bevorzugten Ausführungsform weist die Durchführung ein Abdeckelement auf, welches den von dem Grundkörper gebildeten Hohlraum beim Eingießen in die Bodenplatte nach oben hin abdeckt.

Gemäß einer bevorzugten Ausführungsform deckt ein Abdeckelement der Durchführung den vom Grundkörper gebildeten Hohlraum nach oben hin ab, wenn der Grundkörper in die Bodenplatte eingegossen wird. Wird der Montageaufsatz mit eingegossen, kann dessen Flanschplatte dieses Abdeckelement bilden.

Gemäß einer bevorzugten Ausführungsform erstreckt sich zumindest ein Abschnitt des Abdeckelements oberhalb der Seitenwand des Grundkörpers, wobei dieser Abschnitt beim Erstellen des Fußbodenaufbaus als Schalung genutzt wird.

Gemäß einer bevorzugten Ausführungsform liegt eine Oberseite des Abdeckelements nach dem Eingießen in die Bodenplatte bündig mit der Oberkante der Bodenplatte.

In bevorzugter Ausgestaltung wird das Abdeckelement bündig in die Bodenplatte eingegossen, liegt dann also eine Oberseite des Abdeckelements bündig mit der Oberkante der Bodenplatte. Es wird auf die vorstehend bezüglich des bündigen Einbaus des Grundkörpers genannten Vorteile verwiesen. Prinzipiell kann das Abdeckelement auch einstückig mit dem Grundkörper geformt sein, es könnte dann bspw. nach dem Vergießen ausgeschlagen werden, etwa mit einem Hammer. Dies könnte durch eine Sollbruchstelle unterstützt sein.

In bevorzugter Ausgestaltung ist das Abdeckteilelement jedoch ein zu dem Grundkörper mehrstückiges Abdeckteil (Grundkörper und Abdeckteil sind zwei separate Teile). Das Abdeckteil wird dann nach dem Gießen der Bodenplatte aus dem Grundkörper bzw. von diesem abgenommen, mitunter auch erst nach dem Erstellen des Fußbodenaufbaus. Im Allgemeinen kann es sich bei dem Abdeckteil bspw. auch um einen auf den Grundkörper aufgelegten Deckel handeln.

Gemäß einer bevorzugten Ausführungsform ist das Abdeckelement ein zu dem Grundkörper mehrstückiges Abdeckteil, das nach dem Erstellen des Fußbodenaufbaus von bzw. aus dem Grundkörper genommen wird.

In bevorzugter Ausgestaltung ist das Abdeckelement jedoch ein in dem Hohlraum des Grundkörpers angeordneter Formkörper. Das Abdeckteil kann den Hohlraum bspw. zu mindestens 50 %, 60 % bzw. 70 % ausfüllen, jedenfalls in einem oberen Abschnitt davon grenzt es bevorzugt umlaufend an die Seitenwand des Grundkörpers (an deren Innenwandfläche). Wie erwähnt, kann es sich bei dem Abdeckteil auch um die Flanschplatte des Montageaufsatzes handeln, andererseits kann jedoch auch ein gesondertes Abdeckteil bevorzugt sein (das dann vollständig von der Durchführung abgenommen wird, also nicht an der fertig montierten Anordnung verbleibt).

Gemäß einer bevorzugten Ausführungsform ist das Abdeckteil beim Eingießen des Grundkörpers in die Bodenplatte in dem Hohlraum des Grundkörpers angeordnet.

Auf ein gesondertes Abdeckteil richtet sich eine bevorzugte Ausführungsform, gemäß welcher das im Hohlraum des Grundkörpers angeordnete Abdeckteil gegenüber dessen Seitenwand nach oben übersteht. Der überstehende Abschnitt kann dann beim Erstellen des Fußbodenaufbaus als Schalung genutzt werden, also den Hohlraum oberhalb des Mantelrohres frei von z. B. dem Estrich halten.

Das Abdeckteil wird dann nach dem Erstellen des Fußbodenaufbaus herausgenommen, und es kann der Montageaufsatz platziert werden.

Gemäß einer bevorzugten Ausführungsform ist das Abdeckteil aus einem geschäumten Kunststoffmaterial vorgesehen.

Das im Hohlkörper angeordnete Abdeckteil ist in bevorzugter Ausgestaltung aus einem geschäumten Kunststoffmaterial vorgesehen, bspw. aus geschäumten Polystyrol oder Polypropylen. Es kann insbesondere extrudiertes Polypropylen von Interesse sein. Diese Möglichkeiten betreffen sowohl den mit der Oberkante der Bodenplatte bündigen als auch den Einbau mit Überstand. Es können insbesondere auch zwei Abdeckteile vorgesehen werden, wobei das eine mit geringerer Höhe bündig in die Bodenplatte eingegossen und dann anschließend durch ein Abdeckteil größerer Höhe für das Erstellen des Fußbodenaufbaus ersetzt wird.

Gemäß einer bevorzugten Ausführungsform sitzt das Abdeckteil an dem oberen Ende des Mantelrohres auf, wobei das Abdeckteil und das Mantelrohr mit einer Dichtung gegeneinander gedichtet sind.

In bevorzugter Ausgestaltung sitzt das im Hohlraum angeordnete Abdeckteil am oberen Ende des Mantelrohres auf. Dabei sind das Abdeckteil und das Mantelrohr mit einer Dichtung gegeneinander gedichtet. Dies kann bspw. während der Rohbauphase einem Verschmutzungseintrag in das Mantelrohr vorbeugen (z. B. über Regenwasser, das Verschmutzungen von der Oberfläche des Bodenelements bzw. Fußbodenaufbaus einspült) bzw. auch bereits in der Rohbauphase eine Sicherung gegen Schleichgas darstellen. Die Dichtung ist bevorzugt zwischen einer oberen Stirnseite des Mantelrohres und dem Abdeckteil angeordnet. Sie ist bevorzugt aus einem Elastomermaterial vorgesehen.

Das "Elastomermaterial" ist ganz allgemein ein Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikonbasiertes Material handeln, etwa Silikonkautschuk bzw. Silikonelastomer.

Prinzipiell ist auch denkbar, dass die Dichtung am Abdeckteil befestigt bzw. angeformt ist, dann also entsprechend gemeinsam mit dem Abdeckteil abgenommen wird.

Gemäß einer bevorzugten Ausführungsform verbleibt die Dichtung, wenn das Abdeckteil aus dem Grundkörper genommen wird, an dem Mantelrohr und dichtet sie nach dem Aufsetzen des Montagesaufsatzes gegen den Rohrstutzen.

Bei einer bevorzugten Ausführungsform verbleibt die Dichtung an dem Mantelrohr, wenn das Abdeckteil aus dem Grundkörper genommen wird. Diese Variante betrifft den nachträglich angesetzten Montageaufsatz, der also erst nach dem Gießen der Bodenplatte und gegebenenfalls dem Erstellen des Fußbodenaufbaus an die Durchführung gesetzt wird. Die Dichtung, die zuvor das Abdeckteil und das Mantelrohr gegeneinander gedichtet hat, dichtet dann Letzteres gegen den Rohrstutzen des Montageaufsatzes. Dieselbe Dichtung kann somit vorteilhafterweise zweifach genutzt werden.

Gemäß einer bevorzugten Ausführungsform weist die Dichtung eine im unbelasteten Zustand nach innen oder außen hervortretende Dichtlippe auf, die mit dem Ansetzen des Rohrstutzens nach unten gestülpt wird und sich zwischen dem Rohrstutzen und dem Mantelrohr anlegt.

In bevorzugter Ausgestaltung weist die Dichtung eine Dichtlippe auf, die nach außen (Rohrstutzen wird aufgeschoben) oder bevorzugt nach innen (Rohrstutzen wird eingeschoben) hervortritt. Bezogen auf das Mantelrohr bzw. den Rohrstutzen hat die Dichtlippe also in einem Axialschnitt betrachtet eine radiale Erstreckung.

Mit dem Ansetzen des Rohrstutzens, also dem Auf- oder bevorzugt Einschieben des Rohrstutzens, wird die Dichtlippe nach unten gestülpt. Im gestülpten Zustand liegt die Dichtlippe zwischen dem Rohrstutzen und dem Mantelrohr, bevorzugt zwischen einer Außenwandfläche des Rohrstutzens und einer Innenwandfläche des Mantelrohres (im Falle des bevorzugt eingeschobenen Rohrstutzens). Wenn die Dichtlippe zwischen Mantelrohr und Rohrstutzen angeordnet ist, ist eine Bewegung bzw. Verformung zurück in ihren Ausgangszustand durch die Rohre blockiert, sodass die Dichtlippe bspw. auch im Falle eines Druckereignisses (Überdruck) im Rohrsystem zuverlässig im gestülpten Zustand zwischen den Rohren verbleibt. Die Dichtlippe kann weniger leicht herausgedrückt werden, etwa im Vergleich zu einem zwischen den Rohren angeordneten Dichtring (O-Ring). Beim Ansetzen des Rohrstutzens wird das freie Ende der Dichtlippe vom Ende des Rohrstutzens mitgenommen, danach besteht eine gewisse Selbsthemmung.

Gemäß einer bevorzugten Ausführungsform weist die Dichtung eine im unbelasteten Zustand nach innen oder außen hervortretende Dichtlippe auf, die sich im unbelasteten Zustand zur ihrem freien Ende hin schräg nach oben erstreckt.

In bevorzugter Ausgestaltung weist die Dichtung eine Dichtlippe auf, die sich im unbelasteten Zustand zu ihrem freien Ende hin schräg nach oben erstreckt. Generell bezieht sich der "unbelastete Zustand" auf eine Situation, in welcher die Dichtung zwar am Mantelrohr angeordnet ist, aber weder der Rohrstutzen noch das Abdeckteil angesetzt ist. Die Erstreckung der Dichtlippe nach schräg oben kann bspw. insofern von Vorteil sein, als sie sich dann zuverlässig dichtend an das Abdeckteil anlegt, das Abdeckteil drückt die Dichtlippe ein Stück weit nach unten. Bevorzugt ist dies dieselbe Dichtlippe, die dann auch zwischen Mantelrohr und Rohrstutzen eingestülpt wird. Die Erstreckung nach schräg oben kann auch hinsichtlich der späteren Dichtung zwischen den Rohren von Vorteil sein, nämlich die vorstehend geschilderte "Selbsthemmung" im nach unten gestülpten Zustand weiter erhöhen.

Die Erstreckung "schräg" kann bspw. einen Winkel von mindestens 30°, 45°, 60° bzw. 70° und (davon unabhängig) nicht mehr als 85° bzw. 80° meinen (betrachtet wird jeweils der kleinere von zwei Winkeln, den die Dichtlippe mit der Rohrachse einschließt). In anderen Worten ist die Dichtlippe nicht zu stark aus einer zur Rohrachse senkrechten Erstreckung ausgelenkt, bspw. um nicht mehr als 40°, 30° bzw. 20° (mit möglichen Untergrenzen bei mindestens 5° bzw. 10°).

Generell kann die Dichtung, die am Mantelrohr verbleibt (egal ob mit oder ohne Dichtlippe), an das Mantelrohr angeformt oder als gesondert hergestelltes Teil damit zusammengesetzt sein. Das Anformen kann bspw. im Zuge eines 2K-Spritzgießens erfolgen. Werden die beiden als zuvor gesondert hergestellte Teile zusammengesetzt, kann die Dichtung bevorzugt axial formschlüssig am Mantelrohr gehalten sein, bspw. ein Abschnitt der Dichtung in einer Nut am Mantelrohr sitzen, bevorzugt einer Nut in der Außenwandfläche des Mantelrohres.

Gemäß einer bevorzugten Ausführungsform ist an dem Grundkörper ein Flansch vorgesehen, der nach dem Eingießen des Grundkörpers in die Bodenplatte bündig mit deren Oberkante liegt, wobei vor dem Erstellen des Fußbodenaufbaus eine Flächendichtung auf der Bodenplatte an den Flansch angearbeitet wird.

Bei einer bevorzugten Ausführungsform ist an dem Grundkörper der Durchführung ein Flansch vorgesehen, der nach dem Eingießen in die Bodenplatte bündig mit deren Oberkante liegt. Vor dem Eingießen kann der Flansch somit bspw. auch genutzt werden, um die Durchführung auf der passenden Höhe zu justieren. Der Flansch kann gegenüber dem Grundkörper bspw. um mindestens 2 cm, bevorzugt mindestens 3 cm bzw. 4 cm nach außen hervortretenden (mögliche Obergrenzen können bspw. bei höchstens 30 cm, 20 cm bzw. 15 cm liegen). Vor dem Erstellen des Fußbodenaufbaus wird an den Flansch bevorzugt eine Flächendichtung angearbeitet, also eine Flächendichtung auf der Bodenplatte. Bevorzugt handelt es sich hierbei um eine Dampfsperre, die bspw. in Form einer Folie auf der Bodenplatte ausgelegt wird. Diese Folie kann dann am Flansch befestigt werden, bevorzugt verklebt.

Ein Flansch an der Durchführung, der nach dem Eingießen derselben in die Bodenplatte bündig mit deren Oberkante liegt, kann auch unabhängig von der hauptanspruchsgemäß um höchstens 5 cm überstehenden Seitenwand von Interesse sein und soll entsprechend offenbart sein. Der Flansch kann also bspw. an einem Grundkörper angeordnet sein, dessen Seitenwand nach dem Eingießen in die Bodenplatte weiter hervorsteht, insbesondere auch über den später erstellten Fußbodenaufbau hinaus. Der Flansch muss auch nicht notwendigerweise an einem hohlkörperförmigen Grundkörper angeordnet sein, es kann bspw. auch ein Vollkörper aus geschäumtem Kunststoffmaterial mit einem Flansch vorgesehen sein, etwa aus extrudiertem Polystyrol oder Polypropylen. In einer besonders einfachen Variante könnte an dem bzw. den Mantelrohren auch lediglich eine Flanschplatte angeordnet sein (das Rohr bzw. die Rohre könnten in dieser eingeschoben sein), wobei dieser Anordnung dann so eingegossen wird, dass der Flansch bzw. die Flanschplatte bündig mit der Oberkante der Bodenplatte liegt.

Bevorzugt weist die Durchführung generell eine Mehrzahl Mantelrohre auf, also mindestens 2, bevorzugt mindestens 3. Mögliche Obergrenzen liegen (davon unabhängig) bspw. bei höchstens 6 bzw. 5 Mantelrohren, besonders bevorzugt sind 4 Mantelrohre vorgesehen. Jeder Sparte ist dann ein eigenes Mantelrohr zugeordnet, wobei die Sparten Elektro/Daten auch zusammengelegt sein können. Die Mantelrohre werden bzw. sind in bevorzugter Ausgestaltung mit dem Grundkörper der Durchführung zusammengesetzt (siehe auch vorne). Der Grundkörper hält die Mantelrohre in einer Relativposition zueinander, diese können insbesondere von unten auf bzw. in sein Bodenteil eingeschoben sein.

In bevorzugter Ausgestaltung weist die Durchführung zusätzlich ein Halteteil auf, das unterhalb des Grundkörpers angeordnet ist und die Mantelrohre in einer Relativposition zueinander hält. Dies kann bspw. vor dem Gießen der Bodenplatte beim Einjustieren der Durchführung die Stabilität erhöhen. Eine Aufstellvorrichtung kann dann bspw. an dem Halteteil und/oder dem Grundkörper befestigt sein, bevorzugt an beiden. Prinzipiell ist auch ein Halteteil aus Metall denkbar, etwa aus gebogenen Blechstreifen, in welches die Mantelrohre eingeclipst werden können. Bevorzugt ist das Halteteil jedoch aus einem Kunststoffmaterial vorgesehen. Auch vom Material unabhängig hat es bevorzugt eine Plattenform (flächige Erstreckung in horizontaler Richtung), die Platte wird von Durchgangslöchern für die Mantelrohre durchsetzt. Die Mantelrohre können in die Platte eingeschoben werden, diese kann jedoch auch geteilt ausgeführt sein und um die Mantelrohre zusammengesetzt werden.

Gemäß einer bevorzugten Ausführungsform weist die Durchführung eine Mehrzahl Mantelrohre auf, die an dem Grundkörper angeordnet sind, wobei unterhalb des Grundkörpers zusätzlich ein Halteteil angeordnet ist, das die Mantelrohre in einer Relativposition zueinander hält.

Gemäß einer bevorzugten Ausführungsform ist das Halteteil zu den Mantelrohren gedichtet.

In bevorzugter Ausgestaltung ist das Halteteil gegen die Mantelrohre gedichtet, bspw. mit auf die Mantelrohre aufgeschobenen Dichtringen oder einer an das Halteteil angespritzten Dichtung. Das Halteteil kann dann vorteilhafterweise zugleich als Wassersperrflansch dienen.

In bevorzugter Ausgestaltung wird die Durchführung mit Halteteil so einjustiert, dass das Halteteil vor dem Gießen der Bodenplatte auf einer Schüttung aufsitzt. Auf der Schüttung bzw. Sauberkeitsschicht, also unterhalb der anschließend gegossenen Bodenplatte, wird dann bevorzugt eine Flächendichtung ausgebracht und an das Halteteil angearbeitet. Als Flächendichtung ist eine Kunststofffolie bevorzugt, die weiter bevorzugt mit einem Metallzusatz versehen ist, etwa mit Aluminium. Diese Anordnung kann eine Radondichtung darstellen (Radongas könnte aufgrund des Kamineffekts aus dem Erdreich durch das Gebäude gesaugt werden), wobei das Anarbeiten an das Halteteil im Bereich um die Mantelrohre einen zuverlässigen Anschluss sicherstellt. Speziell bei einer größeren Zahl Mantelrohre vereinfacht das Halteteil das Anarbeiten erheblich. Das Halteteil ist hierfür bevorzugt als Platte ausgeführt, besonders bevorzugt weist es einen nach außen hervortretenden Flansch auf.

Gemäß einer bevorzugten Ausführungsform sitzt das Halteteil vor dem Gießen der Bodenplatte auf einer Schüttung am Erdreich auf, wobei vor dem Gießen der Bodenplatte eine Flächendichtung auf der Schüttung an das Halteteil angearbeitet wird.

Die Durchführung weist bevorzugt eine Aufstellvorrichtung auf, die dem Positionieren bzw. Ausrichten vor dem Vergießen dient. Die Aufstellvorrichtung kann bspw. einen Erdspieß bzw. Ständer umfassen, der in dem ausgehobenen Graben platziert wird. Daran sind das Mantelrohr und der Vergusskörper aufgehängt, vorzugsweise über ein weiteres, höhenverstellbar gelagertes Ständerteil. Die Durchführung wird vor dem Eingießen auf der gewünschten Höhe platziert, und zwar anhand der Oberkante der Bodenplatte als Referenz. Vor dem Gießen der Bodenplatte ist deren Dicke bzw. Höhe und damit die Lage der Oberkante in der Regel bekannt, im Unterschied zur Dicke des später darauf erstellten Fußbodenaufbaus.

Offenbart sein soll auch ein Verfahren zum Montieren einer Durchführung, das sich mit den Merkmalen nach Anspruch 1 ergibt, vorzugsweise in Kombination mit einem bzw. mehreren der abhängigen Ansprüche. Gleichermaßen soll ein Verfahren zum Herstellen einer Bodenplatte mit einem Fußbodenaufbau darauf offenbart sein, das sich mit den Merkmalen der Verwendung nach Anspruch 1 ergibt, vorzugsweise in Kombination mit einem oder mehreren der abhängigen Ansprüche.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Durchführung zum Eingießen in einer Schrägansicht von;
- Figur 2: die Durchführung gemäß Figur 7 in einer Seitenansicht in einer Einbausituation;
- Figur 3: in schematischer Darstellung das Erstellen des Fußbodenaufbaus im Anschluss an das Gießen der Bodenplatte;
- Figur 4: den Grundkörper ohne Abdeckteil in einer Schrägansicht von oben;
- Figur 5: einen nachträglich von oben angesetzten Montageaufsatz mit Rohrstutzen in einer Seitenansicht;
- Figur 6: ein am oberen Ende eines Mantelrohres angeordnetes Dichtelement in einem Axialschnitt.

### Bevorzugte Ausführung der Erfindung

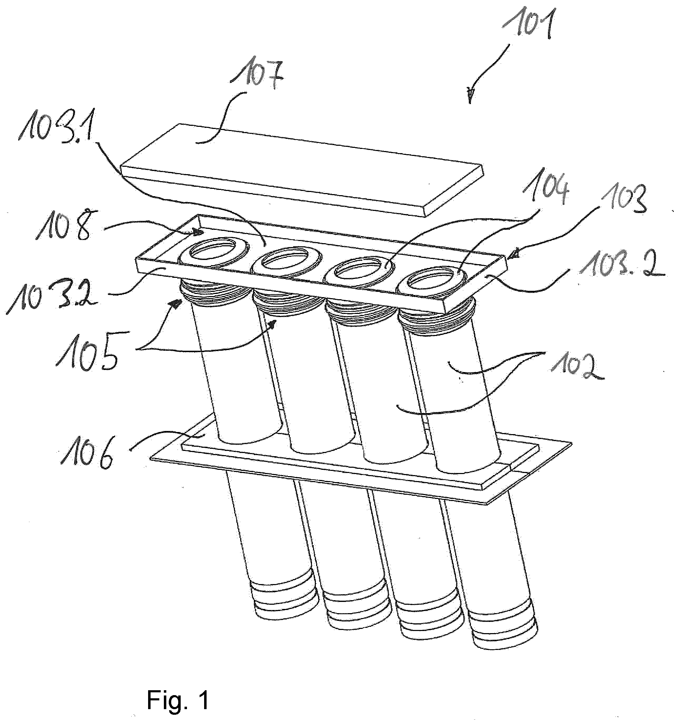

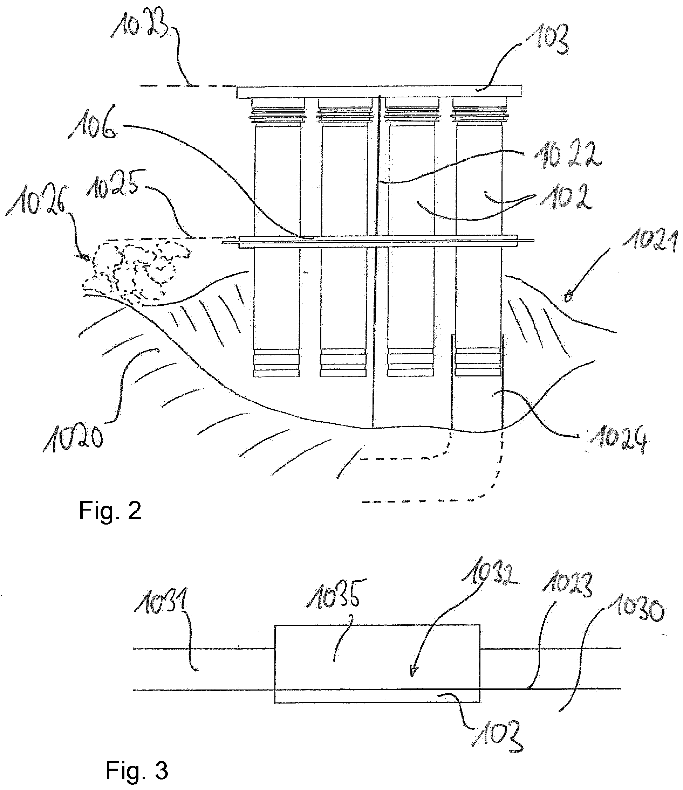

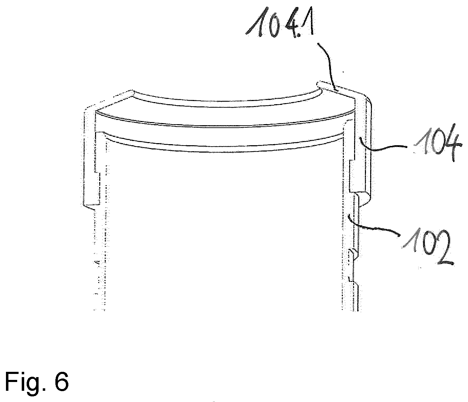

Figur 1 zeigt eine Durchführung 101 in einer Schrägansicht von oben. Die Durchführung 101 weist vier Mantelrohre 102 auf, die von unten an einen Grundkörper 103 angesetzt sind. An den oberen Enden der Mantelrohre 102 sind Dichtungen 104 angeordnet, vergleiche Figur 6 im Detail. Ferner ist außenseitig an den Mantelrohren 102, unterhalb des Grundkörpers 103, jeweils eine Mehrstegdichtung 105 angeordnet, vergleiche auch die Seitenansicht gemäß Figur 2.

Die Mantelrohre 102 sind nicht nur über den Grundkörper 103, sondern zusätzlich auch über ein Halteteil 6 in ihrer Relativposition gehalten. Das Halteteil 106 ist geteilt ausgeführt und um die Mantelrohre 102 herum zusammengesetzt. Die Durchführung 101 weist ferner ein Abdeckteil 107 auf, das in Figur 1 außerhalb des Grundkörpers 103 angeordnet, beim Vergießen sitzt es jedoch in einem von dem Grundkörper 103 begrenzten Hohlraum 108. Dieser Hohlraum 108 ist nach oben hin offen, er wird von einem Bodenteil 103.1 und einer Seitenwand 103.2 des Grundkörpers 103 begrenzt. Das eingesetzte Abdeckteil 107 liegt dann auf den Dichtungen 104 auf, womit die Mantelrohre 102 nach oben hin dichtend verschlossen sind. Eine Oberseite des Abdeckteils 107 liegt dann bündig mit einer Oberkante der Seitenwand 103.2.

Figur 2 zeigt die Durchführung 101 in einer Einbausituation, im Erdreich 1020 wurde ein Graben 1021 ausgehoben. Oberhalb davon soll dann später die Bodenplatte gegossen und das Gebäude errichtet werden. Die Durchführung 101 wird mit einer Aufstellvorrichtung 1022, vorliegend einem höhenverstellbaren Erdspieß, auf einer solchen Höhe eingerichtet, dass das obere Ende des Grundkörpers 103 mit der Oberkante 1023 der später gegossenen Bodenplatte zusammenfällt. An die Mantelrohre 102 wird jeweils ein Schutzrohr 1024 angeschlossen (eines davon ist skizziert), die Schutzrohre 1024 verlaufen in dem Graben 1021 bis zu einer Anschlussstelle an der Straße.

An das Halteteil 106 wird nach dem Verfüllen des Grabens 1021 (und deshalb strichliert dargestellt) eine Flächendichtung 1025 angearbeitet, die dann auf einer Schüttung 26 aufliegt (darauf wird die Bodenplatte gegossen).

Figur 3 zeigt in schematischer Darstellung eine Situation nach dem Betonieren der Bodenplatte 1030. Der Grundkörper 103 liegt bündig mit der Oberkante 1023 der Bodenplatte 1030. Darauf wird ein Fußbodenaufbau 1031 (Estrich etc.) erstellt. Um hierbei, insbesondere beim Gießen des Estrichs, einen Hohlraum 1032 oberhalb der Mantelrohre freizuhalten, wird ein Schalungselement 1035 vorgesehen. Vorliegend wird dazu das bündig eingegossene Abdeckteil 107 aus dem Hohlraum 108 genommen und durch einen höheren Schaumstoffkörper ersetzt (dieser bildet das Schalungselement 1035). Alternativ könnte an die Seitenwand 103.2 auch ein

Schaumstoffstreifen geklebt werden, im Falle des bodenbündigen Einbaus an die Innenwandfläche (bei einem Einbau mit Überstand auch an die Außenwandfläche). In einer ebenfalls nicht dargestellten Variante könnte das Abdeckteil 107 bereits originär mit einer entsprechenden Höhe gefasst sein, könnte also das Abdeckteil 107 dann zugleich auch als Schalungselement 1035 genutzt werden. Beim Erstellen des Fußbodenaufbaus 1031 wird jedenfalls der Hohlraum 1032 freigehalten, die Mantelrohre 102 sind. nach Entfernen des Schalungselements 1035 von oben zugänglich.

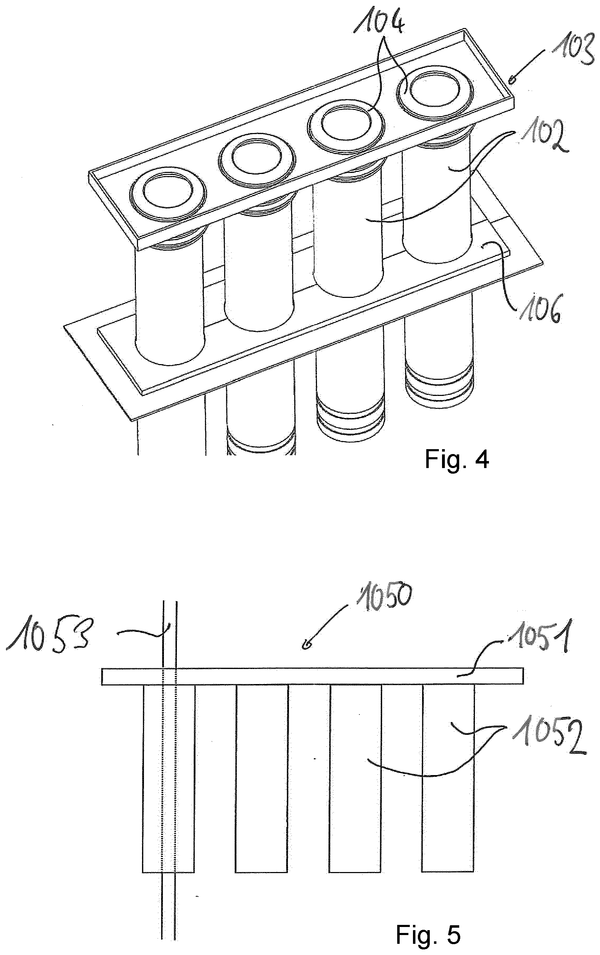

Figur 4 zeigt die Durchführung 101 von schräg oben, ohne Schalungselement 1035 bzw. Abdeckteil 107. Von oben wird dann der in Figur 5 gezeigte Montageaufsatz 50 eingeschoben. Dieser weist eine Flanschplatte 1051 auf, an der sich nach unten erstreckende Rohrstutzen 1052 angeordnet sind. Jeder der Rohrstutzen 1052 wird in ein jeweiliges Mantelrohr 102 eingeschoben und ist mit einer hier nicht dargestellten Dichtung dagegen gedichtet. Die Flanschplatte 1051 sitzt auf der Oberkante 1032 des Fußbodenaufbaus 1031 auf. Durch jedes der insgesamt vier Rohrsysteme (aus Mantelrohr, Rohrstutzen und Schutzrohr) kann dann die eigentliche Leitung 1053 verlegt und gegen den Montageaufsatz 1050 gedichtet werden.

Figur 6 zeigt in einer Detailansicht ein oberes Ende eines Mantelrohres 102 in einem Axialschnitt. Dies illustriert insbesondere die Dichtung 104, die eine nach innen hervortretende Dichtlippe 104.1 aufweist. In Figur 6 ist diese im unbelasteten Zustand gezeigt, es sitzt weder die Abdeckplatte 107 auf noch ist ein Rohrstutzen 1052 eingeschoben. In dem unbelasteten Zustand erstreckt sich die Dichtlippe 104.1 nicht nur nach innen, sondern zusätzlich auch leicht nach schräg oben. Infolgedessen kann sie sich zuverlässig dichtend an das Abdeckteil 107 bzw. das Schalungselement 1035 anlegen.

Wird der Rohrstutzen 1052 des Montageaufsatzes 1050 eingeschoben, wird die Dichtlippe 104.1 nach unten gestülpt, sie liegt dann zwischen dem Rohrstutzen 1052 und dem Mantelrohr 102. Dabei ist durch diese Rohre 102, 1052 eine Bewegung der Dichtlippe 104.1 zurück in ihre Form im unbelasteten Zustand blockiert, sodass sie auch bei Druckschwankungen in den Rohren 102, 1052 zuverlässig dichtet.

## Patentansprüche

1. Verwendung einer Durchführung (101) zum Eingießen in eine Bodenplatte (1030) und Hindurchführen einer Leitung,
welche Durchführung (101) ein Mantelrohr (102) und einen Grundkörper (103) aufweist, der an einem oberen Ende des Mantelrohres (102) angeordnet ist,
wobei der Grundkörper (103) ein Bodenteil (103.1) und eine Seitenwand (103.2) aufweist und damit einen Hohlraum (108) an dem oberen Ende des Mantelrohres (102) bildet,
wobei das Mantelrohr (102) und der Grundkörper (103) solchermaßen in die Bodenplatte (1030) eingegossen werden, dass die Seitenwand (103.2) gegenüber einer Oberkante (1023) der Bodenplatte (1030) um höchstens 5 cm übersteht,
und wobei nach dem Gießen der Bodenplatte (1030) auf dieser ein Fußbodenaufbau (1031) erstellt wird, wobei ein Hohlraum an dem oberen Ende des Mantelrohres (102) freigehalten wird,
und wobei nach dem Gießen der Bodenplatte (1030) die Leitung durch das Mantelrohr (102) verlegt wird, wobei ein Rohrstutzen (1052) eines Montageaufsatzes (1050) das Mantelrohr (102) nach oben hin verlängert,
und wobei der Montageaufsatz (1050), dessen Rohrstutzen (1052) bei der fertig im Fußbodenaufbau (1031) montierten Durchführung (101) an dem Mantelrohr (102) sitzt, bereits gemeinsam mit dem Grundkörper (103) eingegossen wird.

2. Verwendung nach Anspruch 1, bei welcher der Grundkörper (103) bündig mit der Oberkante (1023) der Bodenplatte (1030) in diese eingegossen wird.

3. Verwendung nach Anspruch 1 oder 2, bei welcher der Rohrstutzen (1052) des Montageaufsatzes (1050), wenn der Grundkörper (103) eingegossen wird, in das Mantelrohr (102) eingeschoben ist.

4. Verwendung nach Anspruch 3, bei welcher der Rohrstutzen (1052) des Montageaufsatzes (1050), wenn der Grundkörper (103) eingegossen wird, so weit in das Mantelrohr (102) eingeschoben ist, dass eine Flanschplatte (1051) des Montageaufsatzes (1050) in dem Hohlraum (108) des Grundkörpers (103) angeordnet ist.

5. Verwendung nach Anspruch 4, bei welcher die Flanschplatte (1051) des Montageaufsatzes (1050), wenn der Grundkörper (103) eingegossen wird, vollständig in dem Hohlraum des Grundkörpers (103) aufgenommen ist.

6. Verwendung nach Anspruch 5 in Verbindung mit Anspruch 2, bei welcher der Grundkörper (103) samt Flanschplatte (1051) bodenbündig in die Bodenplatte (1030) eingegossen wird.

7. Verwendung nach einem der vorstehenden Ansprüche, bei welcher der Montageaufsatz (1050) nach dem Eingießen in die Bodenplatte (1030) und vor dem Erstellen des Fußbodenaufbaus ein Stück weit nach oben ausgezogen wird.

8. Verwendung nach Anspruch 7, bei welcher der Montageaufsatz (1050) beim Ausziehen auf die Höhe des fertigen Fußbodenaufbaus (1031) eingestellt wird.

9. Verwendung nach einem der vorstehenden Ansprüche, bei welcher die Durchführung (101) ein Abdeckelement (107) aufweist, welches den von dem Grundkörper (103) gebildeten Hohlraum (108) beim Eingießen in die Bodenplatte (1030) nach oben hin abdeckt.

10. Verwendung nach einem der vorstehenden Ansprüche, bei welcher an dem Grundkörper (103) ein Flansch vorgesehen ist, der nach dem Eingießen des Grundkörpers (103) in die Bodenplatte (1030) bündig mit deren Oberkante (1023) liegt, wobei vor dem Erstellen des Fußbodenaufbaus (1031) eine Flächendichtung auf der Bodenplatte (1030) an den Flansch angearbeitet wird.

11. Verwendung nach einem der vorstehenden Ansprüche, bei welcher die Durchführung (101) eine Mehrzahl Mantelrohre (102) aufweist, die an dem Grundkörper (103) angeordnet sind, wobei unterhalb des Grundkörpers (103) zusätzlich ein Halteteil (106) angeordnet ist, das die Mantelrohre (102) in einer Relativposition zueinander hält.

12. Verwendung nach Anspruch 11, bei welcher das Halteteil (106) zu den Mantelrohren (102) gedichtet ist.

13. Verwendung nach Anspruch 11 oder 12, bei welcher das Halteteil (106) vor dem Gießen der Bodenplatte (1030) auf einer Schüttung am Erdreich aufsitzt, wobei vor dem Gießen der Bodenplatte (1030) eine Flächendichtung auf der Schüttung an das Halteteil (106) angearbeitet wird.

14. Verfahren zum Herstellen einer Bodenplatte (1030) mit einem Fußbodenaufbau (1031) darauf,
unter Verwendung einer Durchführung (101), welche ein Mantelrohr (102) und einen Grundkörper (103) aufweist, der an einem oberen Ende des Mantelrohres (102) angeordnet ist,
wobei der Grundkörper (103) ein Bodenteil (103.1) und eine Seitenwand (103.2) aufweist und damit einen Hohlraum (108) an dem oberen Ende des Mantelrohres (102) bildet,
wobei das Mantelrohr (102) und der Grundkörper (103) solchermaßen in die Bodenplatte (1030) eingegossen werden, dass die Seitenwand (103.2) gegenüber einer Oberkante (1023) der Bodenplatte (1030) um höchstens 5 cm übersteht,
und wobei nach dem Gießen der Bodenplatte (1030) auf dieser der Fußbodenaufbau (1031) erstellt wird, wobei ein Hohlraum an dem oberen Ende des Mantelrohres (102) freigehalten wird,
und wobei nach dem Gießen der Bodenplatte (1030) eine Leitung durch das Mantelrohr (102) verlegt wird, wobei ein Rohrstutzen (1052) eines Montageaufsatzes (1050) das Mantelrohr (102) nach oben hin verlängert.
und wobei der Montageaufsatz (1050), dessen Rohrstutzen (1052) bei der fertig im Fußbodenaufbau (1031) montierten Durchführung (101) an dem Mantelrohr (102) sitzt, bereits gemeinsam mit dem Grundkörper (103) eingegossen wird.

15. Verfahren nach Anspruch 14 unter Verwendung einer Durchführung (101) gemäß einem der Ansprüche 2 bis 13.

## Claims

1. Use of a feed-through (101) for casting into a floor slab (1030) and passing through a line,
which feed-through (101) has a casing tube (102) and a base body (103) being arranged at an upper end of the casing tube (102),
wherein the base body (103) has a floor part (103.1) and a side wall (103.2) and thus forms a cavity (108) at the upper end of the casing tube (102), wherein the casing tube (102) and the base body (103) are cast into the floor slab (1030) such that the side wall (103.2) protrudes with respect to an upper edge (1023) of the floor slab (1030) by at most 5 cm,
and wherein after casting the floor slab (1030) a floor structure (1031) is created thereon, wherein a cavity is kept free at the upper end of the casing tube (102),
and wherein after casting of the floor slab (1030) the line is laid through the casing tube (102), wherein a pipe stub (1052) of a mounting attachment (1050) extends the casing tube (102) in an upward direction,
and wherein the mounting attachment (1050), whose pipe stub (1052) sits on the casing tube (102) when the feed-through (101) is completely mounted in the floor structure (1031), is already cast together with the base body (103).

2. Use according to claim 1, in which the base body (103) is cast into the floor slab (1030) flush with the upper edge (1023) thereof.

3. Use according to claim 1 or 2, in which the pipe stub (1052) of the mounting attachment (1050) is inserted into the casing tube (102) when the base body (103) is cast.

4. Use according to claim 3, in which the pipe stub (1052) of the mounting attachment (1050), when the base body (103) is cast, is inserted into the casing tube (102) to such an extent that a flange plate (1051) of the mounting attachment (1050) is arranged in the cavity (108) of the base body (103).

5. Use according to claim 4, in which the flange plate (1051) of the mounting attachment (1050) is completely accommodated in the cavity of the base body (103) when the base body (103) is cast.

6. Use according to claim 5 in conjunction with claim 2, in which the base body (103) together with the flange plate (1051) is cast into the floor slab (1030) flush with the floor.

7. Use according to one of the preceding claims, in which the mounting attachment (1050) is pulled out a distance upwards after casting into the floor slab (1030) and before the floor structure is created.

8. Use according to claim 7, in which the mounting attachment (1050) is adjusted to the height of the finished floor structure (1031) during pulling out.

9. Use according to one of the preceding claims, in which the feed-through (101) has a cover element (107) which covers the cavity (108) formed by the base body (103) in an upward direction during casting into the floor slab (1030).

10. Use according to one of the preceding claims, in which a flange is provided on the base body (103), which flange lies flush with the upper edge (1023) thereof after the base body (103) is cast into the floor slab (1030), wherein a surface seal is applied on the floor slab (1030) and joined to the flange before the floor structure (1031) is created.

11. Use according to one of the preceding claims, in which the feed-through (101) has a plurality of casing tubes (102) which are arranged on the base body (103), wherein a holding part (106) is additionally arranged below the base body (103), which holding part holds the casing tubes (102) in a relative position with respect to one another.

12. Use according to claim 11, in which the holding part (106) is sealed with respect to the casing tubes (102).

13. Use according to claim 11 or 12, in which the holding part (106) rests on a bed on the ground before the floor slab (1030) is cast, wherein a surface seal is applied on the bed and joined to the holding part (106) before the floor slab (1030) is cast.

14. Method for producing a floor slab (1030) with a floor structure (1031) thereon, using a feed-through (101) which has a casing tube (102) and a base body (103) being arranged at an upper end of the casing tube (102),
wherein the base body (103) has a floor part (103.1) and a side wall (103.2) and thus forms a cavity (108) at the upper end of the casing tube (102),
wherein the casing tube (102) and the base body (103) are cast into the floor slab (1030) such that the side wall (103.2) protrudes with respect to an upper edge (1023) of the floor slab (1030) by at most 5 cm,
and wherein after casting the floor slab (1030) the floor structure (1031) is created thereon, wherein a cavity is kept free at the upper end of the casing tube (102),
and wherein after casting of the floor slab (1030) a line is laid through the casing tube (102), wherein a pipe stub (1052) of a mounting attachment (1050) extends the casing tube (102) in an upward direction,
and wherein the mounting attachment (1050), whose pipe stub (1052) sits on the casing tube (102) when the feed-through (101) is completely mounted in the floor structure (1031), is already cast together with the base body (103).

15. Method according to claim 14 using a feed-through (101) according to one of claims 2 to 13.

## Revendications

1. Utilisation d'une traversée (101) pour le coulage dans une dalle de fondation (1030) et le passage d'une conduite,
laquelle traversée (101) présente un tube de gaine (102) et un corps de base (103) qui est disposé à une extrémité supérieure du tube de gaine (102), dans laquelle le corps de base (103) présente une partie de fond (103.1) et une paroi latérale (103.2) et forme ainsi une cavité (108) à l'extrémité supérieure du tube de gaine (102),
dans laquelle le tube de gaine (102) et le corps de base (103) sont coulés dans la dalle de fondation (1030) de telle sorte que la paroi latérale (103.2) dépasse d'au plus 5 cm par rapport à un bord supérieur (1023) de la dalle de fondation (1030),
et dans laquelle, après le coulage de la dalle de fondation (1030), une structure de plancher (1031) est réalisée sur celle-ci, dans laquelle une cavité est maintenue libre à l'extrémité supérieure du tube de gaine (102),
et dans laquelle, après le coulage de la dalle de fondation (1030), la conduite est posée à travers le tube de gaine (102), dans laquelle une tubulure (1052) d'un embout de montage (1050) prolonge le tube de gaine (102) vers le haut, et dans laquelle l'embout de montage (1050), dont la tubulure (1052) repose sur le tube de gaine (102) lorsque la traversée (101) est montée dans la structure de plancher (1031), est déjà coulé conjointement avec le corps de base (103).

2. Utilisation selon la revendication 1, dans laquelle le corps de base (103) est coulé dans la dalle de fondation (1030) en affleurement avec le bord supérieur (1023) de celle-ci.

3. Utilisation selon la revendication 1 ou 2, dans laquelle la tubulure (1052) de l'embout de montage (1050), lorsque le corps de base (103) est coulé, est insérée dans le tube de gaine (102).

4. Utilisation selon la revendication 3, dans laquelle la tubulure (1052) de l'embout de montage (1050), lorsque le corps de base (103) est coulé, est insérée dans le tube de gaine (102) jusqu'à ce qu'une plaque de bride (1051) de l'embout de montage (1050) soit disposée dans la cavité (108) du corps de base (103).

5. Utilisation selon la revendication 4, dans laquelle la plaque de bride (1051) de l'embout de montage (1050), lorsque le corps de base (103) est coulé, est entièrement reçue dans la cavité du corps de base (103).

6. Utilisation selon la revendication 5 en liaison avec la revendication 2, dans laquelle le corps de base (103) avec la plaque de bride (1051) est coulé dans la dalle de fondation (1030) en affleurement avec le fond.

7. Utilisation selon l'une quelconque des revendications précédentes, dans laquelle l'embout de montage (1050), après le coulage dans la dalle de fondation (1030) et avant la réalisation de la structure de plancher, est tiré vers le haut d'une certaine distance.

8. Utilisation selon la revendication 7, dans laquelle l'embout de montage (1050), lors de l'extraction, est réglé à la hauteur de la structure de plancher (1031) finie.

9. Utilisation selon l'une quelconque des revendications précédentes, dans laquelle la traversée (101) présente un élément de recouvrement (107) qui recouvre vers le haut la cavité (108) formée par le corps de base (103) lors du coulage dans la dalle de fondation (1030).

10. Utilisation selon l'une quelconque des revendications précédentes, dans laquelle il est prévu sur le corps de base (103) une bride qui, après le coulage du corps de base (103) dans la dalle de fondation (1030), est située en affleurement avec son bord supérieur (1023), un joint d'étanchéité de surface étant appliqué sur la dalle de fondation (1030) contre la bride avant la réalisation de la structure de plancher (1031).

11. Utilisation selon l'une quelconque des revendications précédentes, dans laquelle la traversée (101) présente une pluralité de tubes de gaine (102) qui sont disposés sur le corps de base (103), une partie de retenue (106) étant en outre disposée en dessous du corps de base (103), laquelle partie de retenue maintient les tubes de gaine (102) dans une position relative les uns par rapport aux autres.

12. Utilisation selon la revendication 11, dans laquelle la partie de retenue (106) est rendue étanche par rapport aux tubes de gaine (102).

13. Utilisation selon la revendication 11 ou 12, dans laquelle la partie de retenue (106), avant le coulage de la dalle de fondation (1030), repose sur un déversement sur le sol, un joint d'étanchéité de surface étant appliqué sur la partie de retenue (106) avant le coulage de la dalle de fondation (1030) sur le déversement.

14. Procédé de fabrication d'une dalle de fondation (1030) avec une structure de plancher (1031) sur celle-ci,
en utilisant une traversée (101) qui présente un tube de gaine (102) et un corps de base (103) qui est disposé à une extrémité supérieure du tube de gaine (102),
dans laquelle le corps de base (103) présente une partie de fond (103.1) et une paroi latérale (103.2) et forme ainsi une cavité (108) à l'extrémité supérieure du tube de gaine (102),
dans laquelle le tube de gaine (102) et le corps de base (103) sont coulés dans la dalle de fondation (1030) de telle sorte que la paroi latérale (103.2) dépasse d'au plus 5 cm par rapport à un bord supérieur (1023) de la dalle de fondation (1030),
et dans laquelle, après le coulage de la dalle de fondation (1030), la structure de plancher (1031) est réalisée sur celle-ci, dans laquelle une cavité est maintenue libre à l'extrémité supérieure du tube de gaine (102),
et dans laquelle, après le coulage de la dalle de fondation (1030), une conduite est posée à travers le tube de gaine (102), dans laquelle une tubulure (1052) d'un embout de montage (1050) prolonge le tube de gaine (102) vers le haut,
et dans laquelle l'embout de montage (1050), dont la tubulure (1052) repose sur le tube de gaine (102) lorsque la traversée (101) est montée dans la structure de plancher (1031), est déjà coulé conjointement avec le corps de base (103).

15. Procédé selon la revendication 14, utilisant une traversée (101) selon l'une quelconque des revendications 2 à 13.
